# EUROPEAN PATENT APPLICATION

(11) **EP 4 835 545 A1**
(43) Date of publication of application: **04.11.2026**
(21) Application number: 24910775.6
(22) Date of filing: 13.12.2024
(51) Int. Cl.: G02B 27/28

(54) **OPTICAL SYSTEM AND DISPLAY APPARATUS**

(30) Priority: 29.12.2023 CN 202311865201
(71) Applicant: Beijing Zitiao Network Technology Co., Ltd., Beijing 100190 (CN)
(72) Inventor: FU, Ling, Beijing 100028 (CN); LI, Xin, Beijing 100028 (CN); LI, Xiaokai, Beijing 100028 (CN); HU, Hsin-Yi, Beijing 100028 (CN); ZHU, Shaopeng, Beijing 100028 (CN); CHEN, Jian, Beijing 100028 (CN)
(74) Representative: Isarpatent
(86) International application number: PCT/CN2024/139108
(87) International publication number: WO 2025/139844

(57) **Abstract**

An optical system and a display apparatus. The optical system comprises: a lens component, comprising at least two lenses, and the at least two lenses comprising a first surface, a second surface, a third surface and a fourth surface which are sequentially arranged in an optical axis direction of the lens component; a transflective film, provided on the side of the fourth surface away from the third surface; a polarization reflective layer, provided on the side of the third surface away from the fourth surface; a phase retardation film, located on the side of the fourth surface away from the transflective film; and an adhesive layer, comprising an adhesive-layer lens, at least one of the first surface and the second surface being a Fresnel surface, and the adhesive layer being bonded between the second surface and the third surface. The adhesive layer bonded between the second surface and the third surface comprises the adhesive-layer lens, reflection of light rays by means of the adhesive-layer lens and the Fresnel surface can achieve color aberration correction, and the light rays will not pass through the Fresnel surface during returning processes, thus reducing stray light.

## Description

This application claims the priority to and benefits of the Chinese Patent Application No. 202311865201.3, which was filed on December 29, 2023. The aforementioned patent application is hereby incorporated by reference in their entireties.

### TECHNICAL FIELD

At least one embodiment of the present disclosure relates to an optical system and a display apparatus.

### BACKGROUND

With the rapid development of virtual reality (Virtual Reality, VR) technology, among various display devices, a head mounted display (Head Mounted Display, HMD) is favored by people for its characteristics such as high immersion, portability and no need to be held by hand. As one of the important components of virtual reality devices, the performance of the head mounted display is a key factor affecting the imaging quality and cost of the virtual reality devices.

### SUMMARY

At least one embodiment of the present disclosure provides an optical system and a display apparatus.

At least one embodiment of the present disclosure provides an optical system, including: a lens assembly, including at least two lenses, where the at least two lenses include a first surface, a second surface, a third surface, and a fourth surface that are arranged in sequence along an direction of the optical axis of the lens assembly; a transflective film, disposed on a side of the fourth surface away from the third surface; a reflective polarizing layer, disposed on a side of the third surface away from the fourth surface; a phase retardation film, located on a side of the fourth surface away from the transflective film; and an adhesive layer, including an adhesive layer lens; where at least one selected from the group consisting of the first surface and the second surface is a Fresnel surface, and the adhesive layer is glued between the second surface and the third surface.

For example, according to at least one embodiment of the present disclosure, a distance between two intersection points at which the first surface and the second surface intersect with the optical axis is a first distance; and a ratio of a center thickness of the adhesive layer lens to the first distance is in a range from 1/6 to 2.

For example, according to at least one embodiment of the present disclosure, the center thickness of the adhesive layer lens is in a range from 0.5 mm to 3 mm.

For example, according to at least one embodiment of the present disclosure, the at least two lenses include a first lens and a second lens that are arranged along the direction of the optical axis, the first lens includes the first surface and the second surface, and the second lens includes the third surface and the fourth surface; and one of a focal power of the first lens and a focal power of the adhesive layer lens is a positive value, and the other one of the focal power of the first lens and the focal power of the adhesive layer lens is a negative value.

For example, according to at least one embodiment of the present disclosure, a ratio of the focal power of the first lens to a dispersion coefficient of the first lens is a first ratio, and a ratio of the focal power of the adhesive layer lens to a dispersion coefficient of the adhesive layer lens is a second ratio; and a sum of the first ratio and the second ratio is less than 0.

For example, according to at least one embodiment of the present disclosure, a refractive index of the first lens is less than a refractive index of the adhesive layer lens, a refractive index of the second lens is less than the refractive index of the adhesive layer lens, and the refractive index of the first lens is less than or equal to the refractive index of the second lens.

For example, according to at least one embodiment of the present disclosure, a dispersion coefficient of the first lens is greater than a dispersion coefficient of the adhesive layer lens, a dispersion coefficient of the second lens is greater than the dispersion coefficient of the adhesive layer lens, and the dispersion coefficient of the first lens is greater than or equal to the dispersion coefficient of the second lens.

For example, according to at least one embodiment of the present disclosure, a refractive index of the first lens is greater than a refractive index of the adhesive layer lens, and the refractive index of the first lens is greater than a refractive index of the second lens.

For example, according to at least one embodiment of the present disclosure, a dispersion coefficient of the first lens is less than a dispersion coefficient of the adhesive layer lens, and the dispersion coefficient of the first lens is less than a dispersion coefficient of the second lens.

For example, according to at least one embodiment of the present disclosure, a ratio of a center thickness to an edge thickness of the first lens is a third ratio, and a ratio of a center thickness to an edge thickness of the second lens is a fourth ratio; and at least one selected from the group consisting of the third ratio and the fourth ratio is greater than 1 and less than 3.

For example, according to at least one embodiment of the present disclosure, the second surface is a planar Fresnel surface or a curved Fresnel surface.

For example, according to at least one embodiment of the present disclosure, the second surface is a convex surface, and the center thickness of the adhesive layer lens is less than the edge thickness of the adhesive layer lens.

For example, according to at least one embodiment of the present disclosure, the second surface is a convex surface, and an absolute value of a radius of curvature of the second surface is less than an absolute value of a radius of curvature of the third surface.

For example, according to at least one embodiment of the present disclosure, the second surface is a convex surface, and a ratio of the radius of curvature of the second surface to an effective focal length of the optical system is in a range from -0.5 to -2.

For example, according to at least one embodiment of the present disclosure, the second surface is a concave surface, and the center thickness of the adhesive layer lens is greater than the edge thickness of the adhesive layer lens.

For example, according to at least one embodiment of the present disclosure, a distance between two intersection points at which the first surface and the second surface intersect with the optical axis is a first distance; a distance between two intersection points at which the third surface and the fourth surface intersect with the optical axis is a second distance; and a ratio of the second distance to the first distance is in a range from 2 to 4.

For example, according to at least one embodiment of the present disclosure, a ratio of the first distance to an effective focal length of the optical system is in a range from 0.1 to 0.3, and a ratio of the second distance to the effective focal length of the optical system is in a range from 0.5 to 0.7.

For example, according to at least one embodiment of the present disclosure, the first surface is a flat surface; or the first surface is a convex surface, a ratio of a radius of curvature of the first surface to an effective focal length of the optical system is in a range from -40 to -50, and a conic constant of the first surface is in a range from -10 to 0.

For example, according to at least one embodiment of the present disclosure, the third surface is a flat surface; or the third surface is a concave surface, a ratio of a radius of curvature of the third surface to an effective focal length of the optical system is in a range from -3 to -4, and a conic constant of the third surface is in a range from -10 to -1.

For example, according to at least one embodiment of the present disclosure, the fourth surface is a convex surface, a ratio of a radius of curvature of the fourth surface to an effective focal length of the optical system is in a range from -2 to -3, and a conic constant of the fourth surface is in a range from -10 to -1.

For example, according to at least one embodiment of the present disclosure, the at least two lenses include a first lens, a second lens, and a third lens that are arranged in sequence along the direction of the optical axis; the first lens includes the first surface and the second surface, the second lens includes the third surface, and the third lens includes the fourth surface; the second lens further includes a fifth surface opposite to the third surface, and the third lens further includes a sixth surface located between the fifth surface and the fourth surface; and a surface type of the fifth surface is consistent with a surface type of the sixth surface; where one of a focal power of the first lens and a focal power of the adhesive layer lens is a positive value, and the other one of the focal power of the first lens and the focal power of the adhesive layer lens is a negative value; and/or a dispersion coefficient of at least one selected from the group consisting of the first lens and the second lens is different from a dispersion coefficient of the adhesive layer lens.

At least one embodiment of the present disclosure provides a display apparatus, including the optical system according to any one of the above embodiments.

### BRIEF DESCRIPTION OF DRAWINGS

In order to more clearly explain the technical solutions of the embodiments of the present disclosure, the drawings of the embodiments will be briefly described in the following; it is obvious that the described drawings are only related to some embodiments of the present disclosure. For those skilled in the art, other drawings may be obtained from these drawings without any inventive work.
Fig. 1 shows an optical system provided by an example in at least one embodiment of the present disclosure.
Fig. 2A is a spot diagram of the optical system shown in Fig. 1.
Fig. 2B is a curve diagram of a spot size varying with a field of view of the optical system shown in Fig. 1.
Fig. 2C is a lateral chromatic aberration diagram of the optical system shown in Fig. 1.
Fig. 2D is a distortion diagram of the optical system shown in Fig. 1.
Fig. 3 shows an optical system provided by an example in at least one embodiment of the present disclosure.
Fig. 4A is a schematic diagram of light deflection of a single lens.
Fig. 4B is a schematic diagram of light deflection of an example in at least one embodiment of the present disclosure.
Fig. 5 to Fig. 9 show optical systems provided by different examples in at least one embodiment of the present disclosure.
Fig. 10 shows a display apparatus provided by an example in at least one embodiment of the present disclosure.

### DETAILED DESCRIPTION

In order to make the purpose, technical solutions and advantages of the embodiments of the present disclosure clearer, the technical solutions of the embodiments will be described in a clearly and fully understandable way in connection with the drawings in the embodiments of the present disclosure. Apparently, the described embodiments are just a part but not all of the embodiments of the present disclosure. Based on the embodiments of the present disclosure, those skilled in the art may obtain other embodiment(s), without any inventive work, which should be within the scope of the present disclosure.

Unless otherwise defined, the technical or scientific terms used in the present disclosure should have the ordinary meanings as understood by those with ordinary skills in the field to which the present disclosure belongs. The terms "first", "second", and similar terms used in the present disclosure do not represent any order, quantity, or importance, but are merely used to distinguish between different components. The terms "include/comprise" or "including/comprising" and similar terms mean that the elements or objects preceding the terms include the elements or objects listed after the terms and their equivalents, without excluding other elements or objects.

The features of "perpendicular", "parallel", and "same" used in the present disclosure include the features of "perpendicular", "parallel", and "same" in a strict sense, as well as the cases of "substantially perpendicular", "substantially parallel", and "substantially the same" that include certain errors, and considering the measurements and errors related to the measurements of specific quantities (that is, the limitations of the measurement system), they represent an acceptable deviation range for a specific value determined by those of ordinary skill in the art. The "center" in the embodiments of the present disclosure may include a position strictly located at a geometric center and a position of a substantially center located in a small area around the geometric center. For example, "substantially" may represent within one or more standard deviations, or within 10% or 5% of the value.

In a near-eye display optical system, especially in some head-mounted display optical systems that use an inch-level or smaller-size 4K high-definition display screen in combination with a large field of view, low dispersion is one of the prerequisites for ensuring imaging clarity and improving immersion experience. In some optical systems, a method of digital chromatic aberration correction may be used in a later stage to reduce the influence of the inherent chromatic aberration of the optical system on the optical performance. In research, the inventors of the present application have found that, compared with the method of digital chromatic aberration correction, the chromatic aberration problem may be solved more fundamentally by using an optical design method to eliminate chromatic aberration in an early research and development stage of the optical system.

At least one embodiment of the present disclosure provides an optical system, including: a lens assembly, including at least two lenses, where the at least two lenses include a first surface, a second surface, a third surface, and a fourth surface that are arranged in sequence along an direction of the optical axis of the lens assembly; a transflective film, disposed on a side of the fourth surface away from the third surface; a reflective polarizing layer, disposed on a side of the third surface away from the fourth surface; a phase retardation film, located on a side of the fourth surface away from the transflective film; and an adhesive layer, including an adhesive layer lens; where at least one selected from the group consisting of the first surface and the second surface is a Fresnel surface, and the adhesive layer is glued between the second surface and the third surface.

At least one embodiment of the present disclosure provides a display apparatus, including the optical system described above.

According to the optical system and the display apparatus provided by at least one embodiment of the present disclosure, the lens assembly including the at least two lenses is provided, so as to provide attachment positions for the transflective film, the reflective polarizing layer, and the phase retardation film, so that light rays may be folded back between the transflective film and the reflective polarizing layer. The adhesive layer glued between the second surface and the third surface includes the adhesive layer lens, which may refract light rays together with the Fresnel surface to correct chromatic aberration. In addition, the light rays enter the Fresnel surface after exiting from the reflective polarizing layer, and the light rays do not pass through the Fresnel surface during a folding-back process, thereby reducing stray light.

The optical system and the display apparatus will be described below in conjunction with the drawings and through some embodiments.

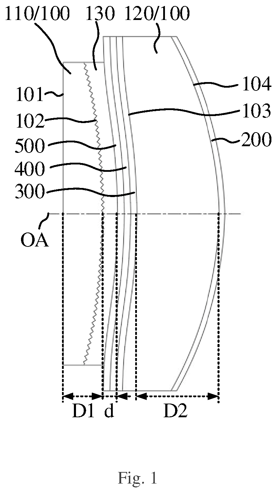

Fig. 1 shows an optical system provided by an example in at least one embodiment of the present disclosure.

Referring to Fig. 1, at least one embodiment of the present disclosure provides an optical system, and the optical system includes a lens assembly 100, and the lens assembly 100 includes a transflective film 200, a reflective polarizing layer 300, a phase retardation film 400, and an adhesive layer. The lens assembly 100 includes at least two lenses. For example, as shown in Fig. 1, the lens assembly 100 may be formed by combining two lenses, a lens 110 and a lens 120. For example, the adhesive layer is a light-transmitting adhesive layer.

As shown in Fig. 1, the at least two lenses include a first surface 101, a second surface 102, a third surface 103, and a fourth surface 104 that are arranged in sequence along an optical axis OA direction of the lens assembly 100. For example, a side of the first surface 101 away from the fourth surface 104 is a light exit side of the optical system. For example, when the optical system is applied to a display apparatus, a display screen may be located on a side of the fourth surface 104 of the optical system away from the first surface 101, and light rays emitted by the display screen enter from the fourth surface 104 and exit from the first surface 101.

As shown in Fig. 1, the transflective film 200 is disposed on a side of the fourth surface 104 away from the third surface 103. The reflective polarizing layer 300 is disposed on a side of the third surface 103 away from the fourth surface 104. The phase retardation film 400 is located on a side of the fourth surface 104 away from the transflective film 200. For example, the light rays that are transmitted through the transflective film 200 and then incident on the lens assembly 100 are configured to be folded back between the transflective film 200 and the reflective polarizing layer 300, and exit from the reflective polarizing layer 300, thereby forming a folded optical path through the reflective polarizing layer 300, the transflective film 200, and the phase retardation film 400.

As shown in Fig. 1, the adhesive layer includes an adhesive layer lens 130, and the adhesive layer is glued between the second surface 102 and the third surface 103. For example, the adhesive layer has adhesiveness, so that it may be glued between the second surface 102 and the third surface 103. In addition, the adhesive layer further includes the adhesive layer lens 130 located between the second surface 102 and the third surface 103, and the adhesive layer lens is a lens formed by using the adhesive layer, so as to utilize a material difference between the adhesive layer lens 130 and the lenses, so that the light rays may be refracted when incident on the adhesive layer lens 130 or when exiting from the adhesive layer lens 130, thereby correcting chromatic aberration.

As shown in Fig. 1, at least one selected from the group consisting of the first surface 101 and the second surface 102 is a Fresnel surface. The Fresnel surface refers to a non-smooth side surface of two opposite surfaces of a Fresnel lens. For example, the first surface 101 and the second surface 102 may be two opposite surfaces of a lens, and the lens may be a Fresnel lens. The Fresnel lens, also known as a threaded lens, has a smooth surface on one side and a plurality of concentric circular patterns (that is, Fresnel zones) on the other side. Through these patterns, a degree of refraction of light rays may be changed, so that the Fresnel lens may effectively reduce a thickness of the lens in a case of a short focal length.

For example, referring to Fig. 1, the second surface 102 may be provided as a Fresnel surface. For example, a material with a relatively low hardness may be selected for the adhesive layer, and the Fresnel surface is provided to be engaged with the adhesive layer, so that on the one hand, an adhesive strength between the adhesive layer and the lenses on two sides of the adhesive layer may be improved, and on the other hand, external stress may be buffered by the adhesive layer, so as to prevent a tooth-shaped structure of the Fresnel surface from being damaged. In addition, by providing the second surface 102 as the Fresnel surface, a usage amount of the adhesive layer material between the second surface 102 and the third surface 103 may be reduced through the tooth-shaped structure of the Fresnel surface, thereby reducing the cost. Moreover, when the first surface 101 is a smooth surface (without a Fresnel surface), it is convenient to attach a film layer. For example, an anti-reflection film may be attached to the first surface 101.

For example, in other examples, the first surface may be provided as a Fresnel surface (not shown in the figure). For example, in other examples, both the first surface and the second surface may be provided as Fresnel surfaces (not shown in the figure). The present disclosure does not limit this.

In the optical system provided by the present disclosure, the lens assembly including the at least two lenses is provided, so as to provide attachment positions for the transflective film, the reflective polarizing layer, and the phase retardation film, so that the light rays may be folded back between the transflective film and the reflective polarizing layer. The adhesive layer glued between the second surface and the third surface includes the adhesive layer lens, which may refract the light rays together with the Fresnel surface to correct chromatic aberration. Meanwhile, the Fresnel surface is beneficial to improving the degree of freedom in design, and the light rays enter the Fresnel surface after exiting from the reflective polarizing layer, and the light rays do not pass through the Fresnel surface during the folding-back process, thereby reducing stray light.

In some optical systems, a Fresnel surface may also be introduced into the folded optical path of the light rays, and different optical materials may be used on two sides of the Fresnel surface. For example, a Fresnel surface may be introduced between the transflective film and the reflective polarizing layer, so as to utilize different refractive indices and different dispersion coefficients of different optical materials, in combination with a refraction effect of the Fresnel surface, to correct chromatic aberration together.

For example, a material of the adhesive layer may include an optical adhesive. For example, a material of the lens assembly may include an optical-grade transparent inorganic polymer or glass. In this way, the material of the adhesive layer lens is different from the materials of the lenses on the two sides of the adhesive layer lens, and chromatic aberration may be corrected through a refractive index difference and a dispersion coefficient difference of different materials. For example, the material of the adhesive layer may further include a silicone material, and a good fluidity of the silicone material will be more conducive to the process.

For example, referring to Fig. 1, the optical system further includes a linear polarizing film 500, and the linear polarizing film 500 is disposed on a side of the reflective polarizing layer 300 away from the transflective film 200. For example, the adhesive layer may be glued between the linear polarizing film 500 and the second surface 102. For example, the linear polarizing film 500 may be a linear polarizer or a polarizer. For example, an optical axis OA of the linear polarizing film 500 coincides with the optical axis OA of the reflective polarizing layer 300, for example, the linear polarizing film 500 may be used to further filter other stray light, and only allow the polarized light (such as s linearly polarized light) passing through the linear polarizing film 500 to enter human eyes. For example, the linear polarizing film may adopt a three-layer laminated structure, an intermediate layer in the three-layer laminated structure may be polyvinyl alcohol (PVA) added with dichroic molecules, and at least one layer located on two sides of the intermediate layer in the three-layer laminated structure may be triacetyl cellulose (TAC). For example, a surface of the linear polarizing film facing air is subjected to anti-reflection treatment. For example, a moth-eye film may be attached to the surface of the linear polarizing film facing air.

For example, referring to Fig. 1, the transflective film 200 is configured to transmit part of light rays and reflect another part of light rays. For example, the transmissivity of the transflective film may be 50%, and the reflectivity of the transflective film may be 50%. For example, the transmissivity of the transflective film may be 60%, and the reflectivity of the transflective film may be 40%. For example, the transmissivity of the transflective film may be 65%, and the reflectivity of the transflective film may be 35%. The optical system provided by the present disclosure is not limited thereto, and the transmissivity and reflectivity of the transflective film may be set according to product requirements. For example, the transflective film may be coated on the fourth surface.

For example, referring to Fig. 1, the reflective polarizing layer 300 has the following functions: there is an optical axis direction in a film layer plane, a transmittance of a polarization component (such as s linearly polarized light) of incident light parallel to the optical axis direction is greater than a transmittance of a polarization component (such as p linearly polarized light) of the incident light perpendicular to the optical axis direction, and a reflectivity of the polarization component (such as s linearly polarized light) parallel to the optical axis direction is smaller than a reflectivity of the polarization component (such as p linearly polarized light) perpendicular to the optical axis direction. For example, the transmittance of the polarized light parallel to the direction of the optical axis of the reflective polarizing layer is not less than 85%, such as not less than 90%, such as not less than 95%, such as not less than 98%; and the reflectivity of the polarized light perpendicular to the direction of the optical axis of the reflective polarizing layer is not less than 85%, such as not less than 90%, such as not less than 95%, such as not less than 98%.

For example, referring to Fig. 1, the reflective polarizing layer 300 is configured to reflect linearly polarized light with one characteristic and transmit linearly polarized light with another characteristic; the reflective polarizing layer 300 may be disposed on the side of the third surface 103 away from the fourth surface 104, and the phase retardation film 400 may be disposed between the reflective polarizing layer 300 and the transflective film 200. For example, the reflective polarizing layer may also be referred to as a polarization beam splitting film. For example, the reflective polarizing layer may further include an Advanced Polarizer Film (APF). For example, the reflective polarizing layer may further include an Image Quality Polarizer Standard (IQPS) film or an Image Quality Polarizer Enhanced (IQPE) film.

For example, the reflective polarizing layer is a cholesteric liquid crystal layer (not shown in the figure), and the phase retardation film is disposed on a side of the cholesteric liquid crystal layer away from the transflective film. For example, the cholesteric liquid crystal may reflect circularly polarized light and transmit circularly polarized light. With reference to the folded optical path principle described above, the cholesteric liquid crystal layer is disposed between the phase retardation film and the transflective film. A wave plate may be disposed on a display surface side of the display screen located on the side of the second lens away from the first lens, image light emitted by the display screen is converted into right-handed circularly polarized light after passing through the wave plate, the right-handed circularly polarized light is incident on the transflective film, and a polarization state of the right-handed circularly polarized light is unchanged after passing through the transflective film. The right-handed circularly polarized light is reflected back to the transflective film after passing through the cholesteric liquid crystal layer, and the first reflection occurs here; the right-handed circularly polarized light is reflected at the transflective film, and the second reflection occurs here. Due to a half-wave loss, the reflected light is changed from right-handed circularly polarized light to left-handed circularly polarized light, the left-handed circularly polarized light reaches the phase retardation film after being transmitted through the cholesteric liquid crystal layer, and is converted into s polarized light by the phase retardation film, and then the s linearly polarized light is transmitted through the linear polarizing film and then exits to human eyes.

For example, referring to Fig. 1, the phase retardation film 400 is configured to enable the transmitted light to achieve a conversion between a circular polarization state and a linear polarization state. For example, the phase retardation film may be a quarter-wave plate. For example, the phase retardation film 400 may have the following characteristics: there is a direction with a lowest refractive index and a direction with a highest refractive index in the film layer plane, which are a fast axis and a slow axis, respectively, and a phase of polarized light parallel to the slow axis is delayed by a quarter wavelength after passing through the phase retardation film, compared with a phase of polarized light parallel to the fast axis after passing through the phase retardation film. For example, an angle between the slow axis of the phase retardation film and the optical axis of the reflective polarizing layer is 45 degrees.

For example, referring to Fig. 1, a material of the phase retardation film 400 may include a liquid crystal polymer. The phase retardation film made of the liquid crystal polymer material is relatively thinner in terms of film thickness, which may reach 1 µm to 5 µm. The thinner phase retardation film has a higher degree of adaptation to a curved surface, and may be more easily shaped according to a surface type of the curved surface, thereby reducing a possibility that wrinkles are generated when the phase retardation film is attached to the curved surface, which affects phase retardation accuracy and optical performance. Moreover, the optical deviation occurring after the phase retardation film made of the liquid crystal polymer material is attached to the curved surface is smaller. The liquid crystal polymer is a crosslinked system, and molecules are linked by chemical bonds, and the modulus is relatively high. In a case where the phase retardation film made of this material is stretched after being attached, only elastic deformation occurs, and no strong optical anisotropic effects such as molecular stretching and rearrangement occur. Therefore, the phase retardation film made of the liquid crystal polymer material is suitable for attaching to a surface type with a small radius of curvature. Such a degree of freedom in radius of curvature may also more easily meet the index requirements for clarity, distortion, dispersion, etc., which is beneficial for the optical system to obtain better image quality.

For example, the optical system may include a first optical element and a second optical element, the first optical element may include the first surface and the second surface, and the second optical element may include the third surface and the fourth surface. The second optical element may further include the transflective film, the reflective polarizing layer, and the phase retardation film, and reference may be made to the foregoing examples for the arrangement of the transflective film, the reflective polarizing layer, and the phase retardation film, which will not be repeated herein. In this way, the folding back of the light rays may be realized through the second optical element.

For example, the adhesive layer lens may be glued between the first optical element and the second optical element. It may be understood that, according to different arrangement positions of the reflective polarizing layer, the phase retardation film, or other film layers, the adhesive layer may be glued between the second surface and different film layers. For example, when no linear polarizing film is provided in the second optical element, and the phase retardation film is disposed between the reflective polarizing layer and the third surface, the adhesive layer may be glued between the reflective polarizing layer and the second surface. For example, when no linear polarizing film is provided in the second optical element, and the phase retardation film is disposed on the side of the reflective polarizing layer (for example, the reflective polarizing layer is a cholesteric liquid crystal layer) away from the transflective film, the adhesive layer may be glued between the phase retardation film and the second surface. For example, when a linear polarizing film is provided in the second optical element, the adhesive layer may be glued between the second surface and the linear polarizing film.

For example, referring to Fig. 1, when the optical system is applied to a display apparatus, the folded optical path principle is as follows: a wave plate may be disposed on a light exit side of a display surface of a display screen located on a side of the fourth surface 104 away from the first surface 101, image light emitted from the display surface is converted into right-handed circularly polarized light after passing through the wave plate, and a polarization state of the right-handed circularly polarized light is unchanged after being transmitted through the transflective film 200. The light rays enter the optical system, and reach the phase retardation film 400 after being transmitted, the right-handed circularly polarized light incident on the phase retardation film 400 is converted into p linearly polarized light, and the p linearly polarized light is reflected by the reflective polarizing layer 300 back to the phase retardation film 400, where the first reflection occurs. Then, the p linearly polarized light is converted into right-handed circularly polarized light after passing through the phase retardation film 400, and the right-handed circularly polarized light reaches the transflective film 200 after being transmitted, and is reflected at the transflective film 200, where the second reflection occurs. Due to a half-wave loss, the reflected light is changed from right-handed circularly polarized light to left-handed circularly polarized light. The left-handed circularly polarized light reaches the phase retardation film 400 after being transmitted, and is changed into s linearly polarized light after passing through the phase retardation film 400, and then the s linearly polarized light is transmitted through the reflective polarizing layer 300 and then exits to an exit pupil, such as a human eye.

The folded optical path may change a polarization state of the light rays propagating between the reflective polarizing layer 300 and the transflective film 200, and realize the folding of the light rays, so that the original focal length of the optical system is folded due to, for example, two reflections increased by the arrangement of the reflective polarizing layer 300, the phase retardation film 400 and the transflective film 200, thereby greatly compressing a space required between the human eye and the optical system, and making the optical system smaller, thinner and lighter.

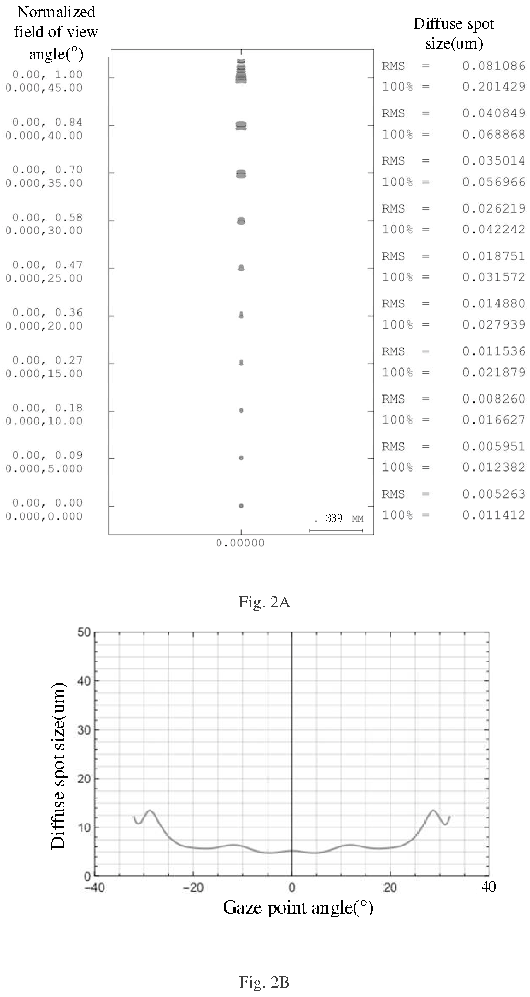

Fig. 2A is a spot diagram of the optical system shown in Fig. 1. Fig. 2B is a curve diagram of spot size changing with field of view of the optical system shown in Fig. 1.

Referring to Fig. 2A, the spot diagram refers to a dispersion pattern scattered in a certain range formed by the intersection points of many light rays emitted from a point with an image plane no longer being concentrated at the same point due to aberration after passing through the optical system, which may be used to evaluate the imaging quality of the optical system. In Fig. 2A, taking the first group of values in the left longitudinal direction as an example, 0.00 represents the normalized field of view in the X direction, 1.00 represents the normalized field of view in the Y direction, 0.000 represents the field angle in the X direction, and 45.00 represents the field angle in the Y direction. In Fig. 2A, taking the first group of values in the right longitudinal direction as an example, RMS represents the root mean square of the radius from the dispersion point of the diffuse spot to the center of mass (or the center of the diffuse spot) of the diffuse spot, and 100% represents the diameter of the diffuse spot. Fig. 2A is usually used to evaluate the full-field clarity of the optical system, that is, when the human eye pupil is at the entrance pupil position on the optical axis OA and gazing at the center of the lens (that is, zero field of view), the imaging clarity of the full-field range that can be covered by the remaining light, which is also called the transient mode. In addition to considering the full-field clarity in the transient mode, for example, for a wearer wearing a head-mounted display, the clarity of the gaze point is one of the more important optical indicators. The clarity of the gaze point refers to the image clarity within a certain angular range that can be directly seen (not seen from the remaining light) when the eyes turn up, down, left and right.

In the gaze point mode, the eyeball rotates by a certain angle, and the pupil deviates from the center of the optical axis OA, and it deviates from the optical axis OA to a certain extent in the Z direction and the Y direction, and the principal ray passing through the center of the pupil has a certain angle with the Z axis. For example, the range of the angle is ±35 degrees, and the range of the angle is set considering the observation habit of human eyes. To see the front objects beyond the range of 35 degrees from the center of the human eyes clearly, people will actively turn their heads rather than turn their eyes hard. Referring to Fig. 2B, Fig. 2B shows the relationship between the clarity of the gaze point and the fixation angle. The diffuse spot of the central field of view is much smaller than one pixel, and the diameter of the diffuse spot is less than 5 microns when the human eyes turn to 20 degrees. It may be seen from Fig. 2B that the diffuse spot of the optical system of the present disclosure is relatively small, and the resolution of the optical system is relatively high. In summary, it may be seen that the optical system provided by at least one embodiment of the present disclosure may form clear images.

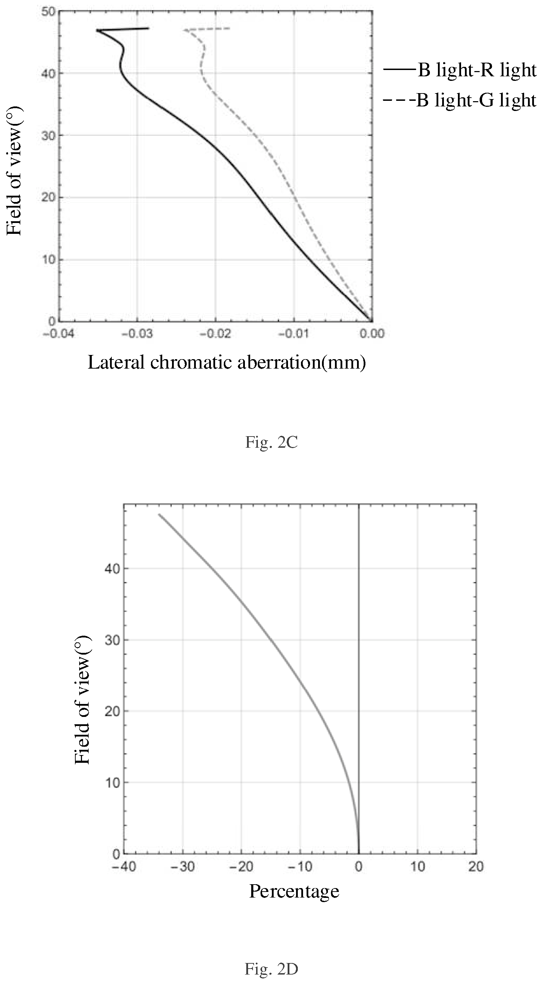

Fig. 2C is a lateral chromatic aberration diagram of the optical system shown in Fig. 1. Referring to Fig. 2C, the lateral chromatic aberration diagram represents the height difference of each wavelength relative to the center wavelength at different image heights on the imaging plane, the horizontal axis represents the lateral chromatic aberration value of each wavelength relative to the center wavelength, and the vertical axis represents the normalized field angle. As shown in Fig. 2C, the R light is red light, the G light is green light, and the B light is blue light. The R light and the B light are located at both ends of the sensitive area of the human eyes, and the G light is located close to the most sensitive spectral line of the human eyes. It may be seen from Fig. 2C that the absolute value of the lateral chromatic aberration between the B light and the R light is controlled within 0.05 mm, and the absolute value of the lateral chromatic aberration between the B light and the G light is controlled within 0.025 mm. It may be seen that, for example, the optical system shown in Fig. 1 may excellently correct the chromatic aberration of the edge field of view and the secondary spectrum of the entire image plane.

Fig. 2D is a distortion diagram of the optical system shown in Fig. 1. Referring to Fig. 2D, the distortion diagram reflects the image plane position difference of different fields of view for forming clear images, and as shown in Fig. 2D, the maximum absolute value of distortion is within 35%. It may be seen that the optical system provided by at least one embodiment of the present disclosure may better correct distortion and meet the requirements for high-quality imaging. In addition, distortion correction may be pre-processed in software.

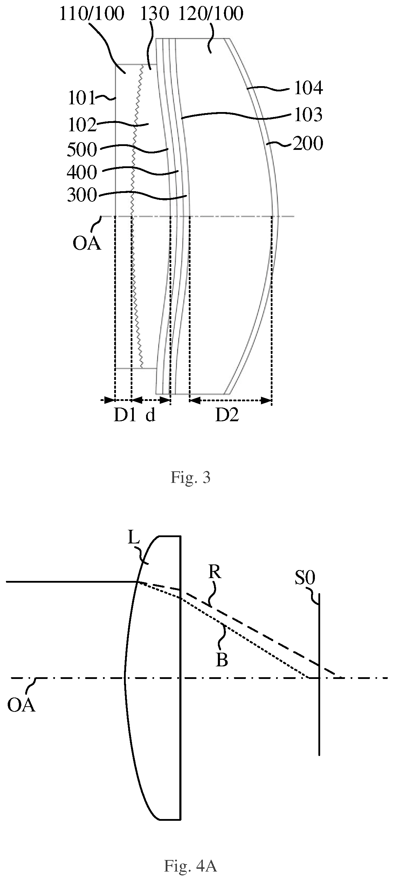

Fig. 3 shows an optical system provided by an example in at least one embodiment of the present disclosure.

The difference between the optical system shown in Fig. 3 and the optical system shown in Fig. 1 lies in that the second surface 102 and the adhesive layer lens 130 in the optical system shown in Fig. 3 are different from the second surface 102 and the adhesive layer lens 130 in the optical system shown in Fig. 1. Certainly, the optical system shown in Fig. 3 may also be different from the optical system shown in Fig. 1 in other aspects, such as the number of lenses, which is not limited by the present disclosure. For example, the number of lenses in the optical system shown in Fig. 3 may be different from or the same as the number of lenses in the optical system shown in Fig. 1. The transflective film 200, the reflective polarizing layer 300, the phase retardation film 400, and the linear polarizing film 500 in the optical system shown in Fig. 3 may have the same characteristics as the transflective film 200, the reflective polarizing layer 300, the phase retardation film 400, and the linear polarizing film 500 in the optical system shown in Fig. 1, which will not be repeated herein.

For example, the adhesive layer lens 130 shown in Fig. 1 is a concave lens, and in the optical system shown in Fig. 1, the adhesive layer lens 130 may be made of an optical adhesive. For example, the adhesive layer lens 130 shown in Fig. 3 is a convex lens. When the adhesive layer lens 130 is a convex lens, the center thickness of the adhesive layer lens 130 is larger than the edge thickness, and more materials are needed. In the optical system shown in Fig. 3, the adhesive layer lens 130 may be made of an optical-grade silicone material, thereby reducing the cost and facilitating the processing. For example, the center thickness of the adhesive layer lens 130 may be the distance between two intersection points of two opposite surfaces of the adhesive layer lens 130 and the optical axis OA. For example, the second surface 102 shown in Fig. 1 is a convex surface. For example, the second surface 102 shown in Fig. 3 is a concave surface.

Referring to Fig. 1 and Fig. 3, in some examples, the distance between the two intersection points at which the first surface 101 and the second surface 102 intersect with the optical axis OA is the first distance D1, and a ratio of the center thickness d of the adhesive layer lens 130 to the first distance D1 may be in a range from 1/6 to 2. By setting the ratio of the center thickness d of the adhesive layer lens 130 to the first distance D1, the adhesive layer may be fully filled between the second surface 102 and the third surface 103. For example, when the second surface 102 is a Fresnel surface, the adhesive layer may fully fill the tooth-shaped structure of the Fresnel surface, and thus a side surface of the adhesive layer lens, which is glued to the second surface 102, has a surface type complementary to the second surface 102.

For example, referring to Fig. 1, the ratio of the center thickness d of the adhesive layer lens 130 to the first distance D1 may be 1/6 to 1/4. For example, referring to Fig. 1, the ratio of the center thickness d of the adhesive layer lens 130 to the first distance D1 may be 1/4 to 1/2. For example, referring to Fig. 3, the ratio of the center thickness d of the adhesive layer lens 130 to the first distance D1 may be 1/2 to 2.

In some optical systems, the adhesive layer used to glue two lenses is usually a relatively thin adhesive layer, and the thickness of the adhesive layer is usually from more than ten micrometers to several tens of micrometers. Referring to Fig. 1 and Fig. 3, in some examples, the center thickness d of the adhesive layer lens 130 may be in a range from 0.5 mm to 3 mm. By providing a thicker adhesive layer, the adhesive layer may fully fill between the second surface 102 and the third surface 103. For example, when the second surface 102 is a Fresnel surface, the adhesive layer may fully fill the tooth-shaped structure of the Fresnel surface. For example, referring to Fig. 1, the center thickness d of the adhesive layer lens 130 may be 0.5 mm to 0.8 mm. For example, referring to Fig. 1, the center thickness d of the adhesive layer lens 130 may be 0.8 mm to 1 mm. For example, referring to Fig. 3, the center thickness d of the adhesive layer lens 130 may be 1 mm to 1.5 mm. For example, referring to Fig. 3, the center thickness d of the adhesive layer lens 130 may be 1.5 mm to 2 mm. For example, referring to Fig. 3, the center thickness d of the adhesive layer lens 130 may be 2 mm to 2.5 mm. For example, referring to Fig. 3, the center thickness d of the adhesive layer lens 130 may be 2.5 mm to 3 mm.

Referring to Fig. 1 and Fig. 3, in some examples, the at least two lenses include the first lens 110 and the second lens 120 that are arranged along the direction of the optical axis OA, the first lens 110 includes the first surface 101 and the second surface 102, and the second lens 120 includes the third surface 103 and the fourth surface 104. For example, the lens assembly 100 may be composed of the first lens 110 and the second lens 120.

Referring to Fig. 1 and Fig. 3, for example, after the first lens 110 and the second lens 120 are formed by injection molding, one of the lenses (for example, the first lens 110) may be placed in a limiting ring of a mold and then filled with glue. A step portion may be provided in the limiting ring to limit the amount of injected glue while limiting the lens, so as to prevent too much or too little glue. Taking the second surface 102 of the first lens 110 being a Fresnel surface as an example, when filling the glue, it is necessary to ensure that the glue fully fills the tooth-space between the tooth-shaped structures on the Fresnel surface. After that, another lens (for example, the second lens 120) may be placed on the step portion of the limiting ring, and pressure is applied, so that the excess glue may be discharged from the glue discharging hole formed in the limiting ring. Meanwhile, the glue discharging hole may also be used to discharge the gas inside the glue. After the excess glue is discharged, the glue may be cured by heating or ultraviolet irradiation to realize gluing and fixing.

Referring to Fig. 1 and Fig. 3, in some examples, the distance between the two intersection points at which the first surface 101 and the second surface 102 intersect with the optical axis OA is the first distance D1, and the distance between the two intersection points at which the third surface 103 and the fourth surface 104 intersect with the optical axis OA is the second distance D2. For example, the first distance D1 is the center thickness of the first lens 110, and the second distance D2 is the center thickness of the second lens 120. A ratio of the second distance D2 to the first distance D1 may be in a range from 2 to 4. For example, the ratio of the second distance D2 to the first distance D1 may be 2.5 to 3.5. For example, the ratio of the second distance D2 to the first distance D1 may be 3.

Referring to Fig. 1 and Fig. 3, in some examples, a ratio of the first distance D1 to the effective focal length of the optical system may be in a range from 0.1 to 0.3. For example, the ratio of the first distance D1 to the effective focal length of the optical system may be 0.15 to 0.25. For example, the ratio of the first distance D1 to the effective focal length of the optical system may be 1.2. In some examples, a ratio of the second distance D2 to the effective focal length of the optical system may be in a range from 0.5 to 0.7. For example, the ratio of the second distance D2 to the effective focal length of the optical system may be 0.55 to 0.65. For example, the ratio of the second distance D2 to the effective focal length of the optical system may be 0.6.

Referring to Fig. 1 and Fig. 3, in some examples, one of the focal power of the first lens 110 and the focal power of the adhesive layer lens 130 is a positive value, and the other is a negative value. In this way, by setting the focal power of the first lens 110 and the focal power of the adhesive layer lens 130 to be positive and negative values, chromatic aberration may be corrected.

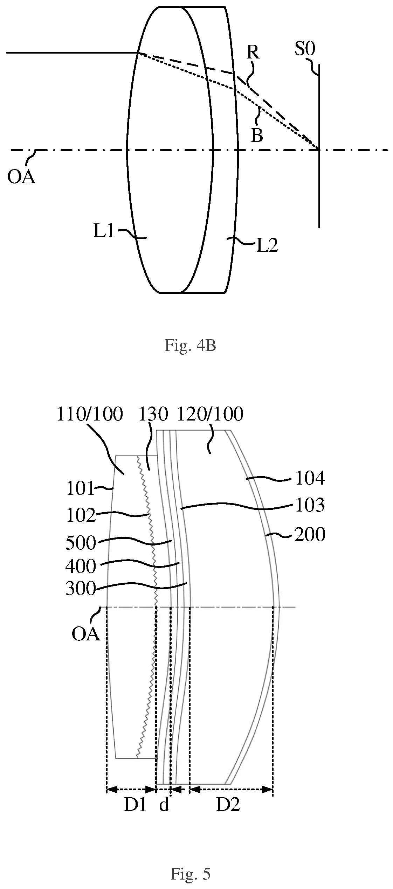

Fig. 4A is a schematic diagram of light deflection of a single lens. Fig. 4B is a schematic diagram of light deflection of an example in at least one embodiment of the present disclosure. Hereinafter, chromatic aberration correction will be described by taking an example in which the light rays incident on the optical system are refracted once.

Fig. 4A illustrates the case where the light rays are deflected in a single lens. As shown in Fig. 4A, the single lens L is a convex lens, and a side away from the target surface S0 is the light incident side, that is, the light rays enter the single lens L from the left side of Fig. 4A, and exit from the single lens L to the target surface S0 after being refracted. After white light (solid line as shown in Fig. 4A) is incident on the single lens L, the white light is dispersed and decomposed into monochromatic light with different wavelengths. In Fig. 4A, the dash line represents the red light R with a longer wavelength, and the dotted line represents the blue light B with a shorter wavelength. As may be seen from Fig. 4A, the blue light B has a shorter wavelength and the red light R has a longer wavelength, which will make it difficult to converge on the target surface S0 after passing through the single lens L.

Fig. 4B illustrates the case where the light rays are deflected in the optical system when the focal power of the lens L1 and the focal power of the lens L2 in the lens assembly are positive and negative values. As shown in Fig. 4B, the side away from the target surface S0 is the light incident side, that is, the light rays enter the lens assembly from the left side of Fig. 4B, and exit from the lens assembly to the target surface S0 after being refracted. After the white light (solid line as shown in Fig. 4B) is incident on the lens assembly, the white light is dispersed and decomposed into monochromatic light with different wavelengths. In Fig. 4B, the dash line represents the red light R with a longer wavelength, and the dotted line represents the blue light B with a shorter wavelength. By setting the focal power of the lens L1 and the focal power of the lens L2 to be positive and negative respectively, the deflection angles of the red light R and the blue light B are changed, and finally the red light R and the blue light B may converge on the target surface S0.

For example, referring to Fig. 4B, the lens L1 is a convex lens with a positive focal power, and the lens L2 is a concave lens with a negative focal power. After the incident light rays enter the lens L1 and are dispersed, the blue light B with a relatively shorter wavelength is more deflected toward the optical axis OA than the red light R. Since the focal power of the lens L2 is negative, after the light rays exit from the lens L2, the red light R and the blue light B may converge on the target surface S0, thereby achieving the purpose of correcting chromatic aberration.

For example, referring to Fig. 1, the first lens 110 may be a convex lens, and the adhesive layer lens 130 may be a concave lens, so that the focal power of the first lens 110 is positive and the focal power of the adhesive layer lens 130 is negative, thereby correcting chromatic aberration. Moreover, the adhesive layer lens 130, which is a concave lens, uses less adhesive layer material. For example, the second surface 102 of the first lens 110 is a Fresnel surface, and the adhesive layer glues the Fresnel surface and the second lens 120 together, so that the usage amount of the adhesive layer is reduced through the tooth-shaped structure of the Fresnel surface, thereby reducing the cost. In addition, by providing the first lens 110 as a convex lens and the adhesive layer lens 130 as a concave lens, the optical system may be made thinner and lighter.

For example, referring to Fig. 3, the first lens 110 may be a concave lens, and the adhesive layer lens 130 may be a convex lens, so that the focal power of the first lens 110 is negative and the focal power of the adhesive layer lens 130 is positive, thereby correcting chromatic aberration. Moreover, the center thickness of the convex adhesive layer lens 130 is thicker, which may ensure that there is an adhesive layer between the center of the first lens 110 and the center of the second lens 120.

In some examples, referring to Fig. 1, the ratio of the focal power of the first lens 110 to the dispersion coefficient of the first lens 110 is the first ratio, and the ratio of the focal power of the adhesive layer lens 130 to the dispersion coefficient of the adhesive layer lens 130 is the second ratio. The sum of the first ratio and the second ratio is less than 0. In this way, the combination of positive and negative focal powers of the first lens 110 and the adhesive layer lens may be used to correct chromatic aberration, and at the same time, the focal power of the first lens 110 and the focal power of the adhesive layer lens may be used to offset at least part of the focal power of the second lens 120, so that the chromatic aberration correction effect is better.

In some examples, referring to Fig. 1, the refractive index of the first lens 110 is less than the refractive index of the adhesive layer lens 130, the refractive index of the second lens 120 is less than the refractive index of the adhesive layer lens 130, and the refractive index of the first lens 110 is less than or equal to the refractive index of the second lens 120. By setting the first lens 110, the second lens 120, and the adhesive layer lens 130 to have different refractive indices, deflection angles of light rays (for example, red light and blue light) with different wavelengths may be changed after white light is dispersed, so that the light rays with different wavelengths may converge after being exited from the lens assembly 100, thereby correcting chromatic aberration. Moreover, the refractive index of the first lens 110 may be relatively close to the refractive index of the second lens 120, deflection of the light rays occurs in the first lens 110 and the second lens 120 with a small refractive index difference, and the reflection loss of the light rays is less than 2% of the reflection loss at the interface between the lens and air, thereby improving the optical efficiency.

Since there is a refractive index difference of the same transparent medium for light with different wavelengths, and white light is composed of light of different colors with different wavelengths, the transparent medium will have a dispersion phenomenon when refracting the white light. The dispersion coefficient (also known as the Abbe number) is an index used to represent the dispersion capability of the transparent medium, and is used to measure the dispersion degree of the light rays of the transparent medium. Generally speaking, the greater the refractive index of the medium, the more serious the dispersion, and the smaller the Abbe number; on the contrary, the smaller the refractive index of the medium, the lighter the dispersion, and the greater the Abbe number.

In some examples, referring to Fig. 1, the dispersion coefficient of the first lens 110 is greater than the dispersion coefficient of the adhesive layer lens 130, the dispersion coefficient of the second lens 120 is greater than the dispersion coefficient of the adhesive layer lens 130, and the dispersion coefficient of the first lens 110 is greater than or equal to the dispersion coefficient of the second lens 120. By setting the first lens 110, the second lens 120, and the adhesive layer lens 130 to have different dispersion coefficients, the deflection angles of the light rays (for example, the red light and the blue light) with different wavelengths may be changed after the white light is dispersed, so that the light rays with different wavelengths may converge after being exited from the lens assembly 100, thereby correcting chromatic aberration.

For example, referring to Fig. 1, the dispersion coefficient of the first lens 110 may be set to be much greater than the dispersion coefficient of the adhesive layer lens 130, the dispersion coefficient of the second lens 120 may be set to be much greater than the dispersion coefficient of the adhesive layer lens 130, and the dispersion coefficient of the first lens 110 may be set to be greater than or equal to the dispersion coefficient of the second lens 120.

In some examples, referring to Fig. 3, the refractive index of the first lens 110 is greater than the refractive index of the adhesive layer lens 130, and the refractive index of the first lens 110 is greater than the refractive index of the second lens 120. By setting the first lens 110, the second lens 120, and the adhesive layer lens 130 to have different refractive indices, deflection angles of light rays (for example, red light and blue light) with different wavelengths may be changed after white light is dispersed, so that the light rays with different wavelengths may converge after being exited from the lens assembly 100, thereby correcting chromatic aberration.

For example, referring to Fig. 3, the refractive index of the first lens 110 may be set to be greater than the refractive index of the adhesive layer lens 130, and at the same time, the refractive index of the second lens 120 may be set to be relatively close to the refractive index of the adhesive layer lens 130, so as to facilitate chromatic aberration correction.

In some examples, referring to Fig. 3, the dispersion coefficient of the first lens 110 is less than the dispersion coefficient of the adhesive layer lens 130, and the dispersion coefficient of the first lens 110 is less than the dispersion coefficient of the second lens 120. By setting the first lens 110, the second lens 120, and the adhesive layer lens 130 to have different dispersion coefficients, the deflection angles of the light rays (for example, the red light and the blue light) with different wavelengths may be changed after the white light is dispersed, so that the light rays with different wavelengths may converge after being exited from the lens assembly 100, thereby correcting chromatic aberration.

For example, referring to Fig. 3, the dispersion coefficient of the first lens 110 may be set to be much less than the dispersion coefficient of the adhesive layer lens 130, and at the same time, the dispersion coefficient of the second lens 120 may be set to be relatively close to the dispersion coefficient of the adhesive layer lens 130, so as to facilitate chromatic aberration correction.

For example, referring to Fig. 1 or Fig. 3, the dispersion coefficient of the first lens 110 may be 50 to 60. For example, the dispersion coefficient of the first lens may be 54 to 56. For example, the dispersion coefficient of the adhesive layer lens 130 may be 30 to 40. For example, the dispersion coefficient of the adhesive layer lens may be 34 to 36. For example, the dispersion coefficient of the second lens may be 50 to 60. For example, the dispersion coefficient of the second lens may be 55 to 57. For example, the dispersion coefficient of the second lens may be 56.5.

For example, referring to Fig. 1 or Fig. 3, the refractive index of the first lens 110 may be 1.4 to 1.5. For example, the refractive index of the first lens may be 1.41 to 1.49. For example, the refractive index of the first lens may be 1.42 to 1.48. For example, the refractive index of the first lens may be 1.45. For example, the refractive index of the second lens 120 may be 1.5 to 1.6. For example, the refractive index of the second lens may be 1.54 to 1.56. For example, the refractive index of the first lens may be 1.49, and the refractive index of the second lens may be 1.54. For example, the refractive index of the adhesive layer lens may be 1.5 to 1.6. For example, the refractive index of the adhesive layer lens may be 1.53 to 1.57.

For example, referring to Fig. 1 or Fig. 3, after the light rays exit from the second lens 120, the refractive index of the external air may be 1.52, and the dispersion coefficient may be 64.

In some examples, referring to Fig. 1 or Fig. 3, the ratio of the center thickness of the first lens 110 to the edge thickness of the first lens 110 is the third ratio, and the ratio of the center thickness of the second lens 120 to the edge thickness of the second lens 120 is the fourth ratio; at least one selected from the group consisting of the third ratio and the fourth ratio is greater than 1 and less than 3. For example, the ratio of the center thickness of the first lens to the edge thickness of the first lens may be 1 to 3. For example, the ratio of the center thickness of the first lens to the edge thickness of the first lens may be 2 to 2.5. For example, the ratio of the center thickness of the second lens 120 to the edge thickness of the second lens 120 may be 1 to 3. For example, the ratio of the center thickness of the second lens to the edge thickness of the second lens may be 2 to 2.5. Setting the proportional relationship between the center thickness and the edge thickness of each of the above lenses is favorable for ensuring the injection molding of each lens.

In some examples, the first surface may be a flat surface. For example, referring to Fig. 1, the second surface 102 may be set as a convex surface, so that the first lens 110 is a convex lens and the adhesive layer lens 130 is a concave lens, thereby correcting chromatic aberration. For example, referring to Fig. 3, the second surface 102 may be set as a concave surface, so that the first lens 110 is a concave lens and the adhesive layer lens 130 is a convex lens, thereby correcting chromatic aberration.

Fig. 5 shows an optical system provided by an example in at least one embodiment of the present disclosure.

The difference between the optical system shown in Fig. 5 and the optical system shown in Fig. 1 lies in that the first surface 101 in the optical system shown in Fig. 5 is different from the first surface 101 in the optical system shown in Fig. 1. Certainly, the optical system shown in Fig. 5 may also be different from the optical system shown in Fig. 1 in other aspects, such as the number of lenses, which is not limited by the present disclosure. For example, the number of lenses in the optical system shown in Fig. 5 may be different from or the same as the number of lenses in the optical system shown in Fig. 1. The transflective film 200, the reflective polarizing layer 300, the phase retardation film 400, and the linear polarizing film 500 in the optical system shown in Fig. 5 may have the same characteristics as the transflective film 200, the reflective polarizing layer 300, the phase retardation film 400, and the linear polarizing film 500 in the optical system shown in Fig. 1, which will not be repeated herein.

In some examples, referring to Fig. 5, the first surface 101 may be a convex surface. For example, the second surface 102 may be set as a convex surface, so that the first lens 110 is a convex lens and the adhesive layer lens 130 is a concave lens, thereby correcting chromatic aberration.

For example, the first surface 101 may be an aspherical surface, which may be expressed by the following numerical formula:
$z = \frac{{CY}^{2}}{1 + \sqrt{1 - \left(1+k\right) {C}^{2} {Y}^{2}}} + {\sum }_{i = 2}^{N} {α}_{i} {Y}^{2 i} .$

For example, in the above formula, the height of the aspherical surface in the direction perpendicular to the optical axis OA is Y, and the distance from the vertex of the aspherical surface to the projection of a position with a height of Y on the aspherical surface on the optical axis OA is z, that is, z is the coordinate in the direction of the optical axis OA; C is the curvature (the reciprocal of the radius of curvature R), k is the Conic Constant, αᵢ is the coefficient of each high-order term, and 2i is the high order (the order of Aspherical Coefficient) of the aspherical surface.

In actual optimization of the reasonable configuration of each parameter of the lens assembly, values such as the radius of curvature, the conic constant, the height, and the aspherical coefficient of each lens in the lens assembly are put into the above numerical formula, and optical simulation calculation is performed to obtain various optimization parameters that may correct the aberration of each lens in the lens assembly. The preferred values of the radius of curvature, the thickness along the optical axis OA, the effective aperture, and the conic constant of each lens in the lens assembly are obtained through the optimization process.

Referring to Fig. 5, the ratio of the radius of curvature of the first surface 101 to the effective focal length of the optical system may be in a range from -40 to -50, and the conic constant of the first surface 101 may be in a range from -10 to 0. For example, the ratio of the radius of curvature of the first surface to the effective focal length of the optical system may be -42 to -48. For example, the ratio of the radius of curvature of the first surface to the effective focal length of the optical system may be -44 to -46. For example, the ratio of the radius of curvature of the first surface to the effective focal length of the optical system may be -45. For example, the conic constant of the first surface may be -9 to -0.5. For example, the conic constant of the first surface may be -8 to -2. For example, the conic constant of the first surface may be -6 to -4. For example, the conic constant of the first surface may be -5.

Certainly, in some other examples, the first surface may be set as a concave surface, and by changing the surface type parameter of the second surface, the first lens may be a convex lens or a concave lens, and accordingly, the adhesive layer lens may be a concave lens or a convex lens. As long as the focal power of the first lens and the focal power of the adhesive layer lens may be positive and negative by setting the surface type parameter of each surface, it is not limited by the present disclosure.

In some examples, referring to Fig. 1, Fig. 3, and Fig. 5, the second surface 102 is a curved Fresnel surface. For example, the second surface 102 may be a convex Fresnel surface (referring to Fig. 1 and Fig. 5) or a concave Fresnel surface (referring to Fig. 3), which is not limited by the present disclosure.

In some examples, referring to Fig. 1 or Fig. 5, the second surface 102 is a convex surface, and the center thickness of the adhesive layer lens 130 is less than the edge thickness of the adhesive layer lens 130. When the second surface 102 is set as a convex surface, by setting the center thickness of the adhesive layer lens 130 to be less than the edge thickness of the adhesive layer lens 130, the adhesive layer lens 130 may be formed as a concave lens, so as to cooperate with the first lens 110 which is a convex lens to correct chromatic aberration.

In some examples, referring to Fig. 1 or Fig. 5, the second surface 102 is a convex surface, and the absolute value of the radius of curvature of the second surface 102 is less than the absolute value of the radius of curvature of the third surface 103. In this way, the curvature of the third surface 103 is smaller, and the curvature of the second surface 102 is larger, so that the adhesive layer lens 130 filled between the second surface 102 and the third surface 103 is thinner in the middle and thicker at the edge to form a concave lens.

The surface type of the curved Fresnel surface may be similar to the surface type of the aspherical surface, and reference may be made to the surface type formula of the aspherical surface mentioned above. In some examples, referring to Fig. 1 or Fig. 5, the second surface 102 is a convex surface, and the ratio of the radius of curvature of the second surface 102 to the effective focal length of the optical system may be in a range from -0.5 to -2. For example, the radius of curvature of the second surface 102 refers to the radius of curvature of the Fresnel surface including the tooth-shaped structure. For example, the second surface 102 of the Fresnel surface may be similar to a smooth toothless spherical surface or aspherical surface, and the curvature of the spherical surface or the aspherical surface is the curvature of the Fresnel surface. For example, the tooth width or tooth height of the second surface 102 may be assumed to be infinitesimal. For example, the ratio of the radius of curvature of the second surface 102 to the effective focal length of the optical system may be -1 to -1.4. For example, the ratio of the radius of curvature of the second surface 102 to the effective focal length of the optical system may be -1.25.

In some examples, referring to Fig. 3, the second surface 102 is a concave surface, and the center thickness of the adhesive layer lens 130 is greater than the edge thickness of the adhesive layer lens 130. When the second surface 102 is set as a concave surface, by setting the center thickness of the adhesive layer lens 130 to be greater than the edge thickness of the adhesive layer lens 130, the adhesive layer lens 130 may be formed as a convex lens, so as to cooperate with the first lens 110 having the characteristics of a concave lens to correct chromatic aberration.

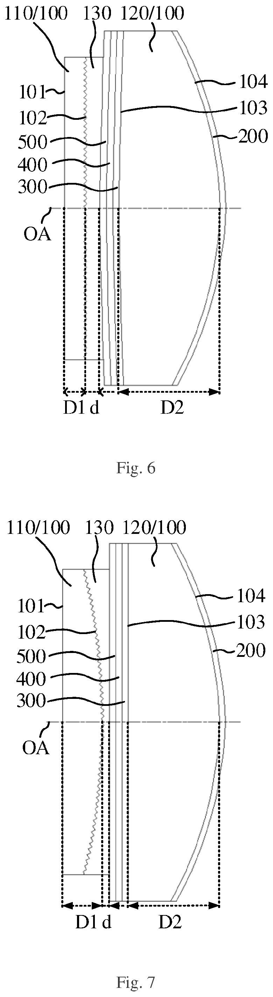

Fig. 6 shows an optical system provided by an example in at least one embodiment of the present disclosure.

The difference between the optical system shown in Fig. 6 and the optical system shown in Fig. 1 lies in that the second surface 102, the adhesive layer lens 130, and the third surface 103 in the optical system shown in Fig. 6 are different from the second surface 102, the adhesive layer lens 130, and the third surface 103 in the optical system shown in Fig. 1. Certainly, the optical system shown in Fig. 6 may also be different from the optical system shown in Fig. 1 in other aspects, such as the number of lenses, which is not limited by the present disclosure. For example, the number of lenses in the optical system shown in Fig. 6 may be different from or the same as the number of lenses in the optical system shown in Fig. 1. The transflective film 200, the reflective polarizing layer 300, the phase retardation film 400, and the linear polarizing film 500 in the optical system shown in Fig. 6 may have the same characteristics as the transflective film 200, the reflective polarizing layer 300, the phase retardation film 400, and the linear polarizing film 500 in the optical system shown in Fig. 1, which will not be repeated herein.

In some examples, referring to Fig. 6, the second surface 102 is a planar Fresnel surface. For example, the second surface 102 may be set as a planar Fresnel surface, and at the same time, by setting the third surface 103 as a convex surface, the adhesive layer lens 130 between the second surface 102 and the third surface 103 may be a concave lens, thereby correcting chromatic aberration. For example, the phase retardation film 400 may be attached to the side of the third surface 103 away from the fourth surface 104, and by setting the third surface 103 as a convex surface, it is also beneficial to attaching the phase retardation film 400, and a probability of occurrence of attachment wrinkles is reduced. For example, the second surface may also be set as a convex Fresnel surface, and at the same time, the third surface may be set as a convex surface, so that the adhesive layer lens is a concave lens, which is not limited by the present disclosure.

For example, a continuous curved surface may be discretized, and then a discretized spherical curvature or aspherical curvature may be superimposed to obtain a curved Fresnel surface with a curved base surface (for example, referring to Fig. 1, Fig. 3, and Fig. 5). For example, a continuous curved surface may be discretized to obtain a planar Fresnel surface with a flat base surface (for example, referring to Fig. 6). In this way, the radius of curvature of the Fresnel surface in the optical system has a larger adjustment space, so that the dispersed light rays may be better deflected and converged. Moreover, by adjusting the slope of the Fresnel surface, the deflection ability of the second surface to the light rays is enhanced, which not only achieves ultra-short focus, but also improves the chromatic aberration correction effect and improves the clarity.

For example, parameters such as a draft angle, a tooth width, and a tooth height of the Fresnel surface may be obtained by considering the light deflection in the optical system and the surface type parameter of each surface in the lens assembly. In this way, by designing the surface type of the Fresnel surface, the stray light that may be generated on the backlight surface of the Fresnel surface may be reduced, and the visual effect may be improved.

Referring to Fig. 1, Fig. 3, and Fig. 5, in some examples, the third surface 103 may be a concave surface, the ratio of the radius of curvature of the third surface 103 to the effective focal length of the optical system may be in a range from -3 to -4, and the conic constant of the third surface 103 may be in a range from -10 to -1. For example, the ratio of the radius of curvature of the third surface 103 to the effective focal length of the optical system may be -3.2 to -3.9. For example, the ratio of the radius of curvature of the third surface 103 to the effective focal length of the optical system may be -3.4 to -3.6. For example, the ratio of the radius of curvature of the third surface 103 to the effective focal length of the optical system may be -3.5. For example, the conic constant of the third surface 103 may be -8 to -2. For example, the conic constant of the third surface 103 may be -6 to -4. For example, the conic constant of the third surface 103 may be -5.

Fig. 7 shows an optical system provided by an example in at least one embodiment of the present disclosure.

The difference between the optical system shown in Fig. 7 and the optical system shown in Fig. 1 lies in that the adhesive layer lens 130 and the third surface 103 in the optical system shown in Fig. 7 are different from the adhesive layer lens 130 and the third surface 103 in the optical system shown in Fig. 1. Certainly, the optical system shown in Fig. 7 may also be different from the optical system shown in Fig. 1 in other aspects, such as the number of lenses, which is not limited by the present disclosure. For example, the number of lenses in the optical system shown in Fig. 7 may be different from or the same as the number of lenses in the optical system shown in Fig. 1. The transflective film 200, the reflective polarizing layer 300, the phase retardation film 400, and the linear polarizing film 500 in the optical system shown in Fig. 7 may have the same characteristics as the transflective film 200, the reflective polarizing layer 300, the phase retardation film 400, and the linear polarizing film 500 in the optical system shown in Fig. 1, which will not be repeated herein.

In some examples, referring to Fig. 7, the third surface 103 may be a flat surface. When the third surface 103 is a flat surface, the second surface 102 may be set as a convex surface, so that the adhesive layer lens 130 between the second surface 102 and the third surface 103 is a concave lens. In this way, the adhesive layer lens 130 which is a concave lens may cooperate with the first lens 110 which is a convex lens to correct chromatic aberration.

Referring to Fig. 1, Fig. 3, and Fig. 5 to Fig. 7, in some examples, the fourth surface 104 is a convex surface, the ratio of the radius of curvature of the fourth surface 104 to the effective focal length of the optical system may be in a range from -2 to -3, and the conic constant of the fourth surface 104 may be in a range from -10 to -1. For example, the ratio of the radius of curvature of the fourth surface 104 to the effective focal length of the optical system may be -2.2 to -2.8. For example, the ratio of the radius of curvature of the fourth surface 104 to the effective focal length of the optical system may be -2.4 to -2.6. For example, the ratio of the radius of curvature of the fourth surface 104 to the effective focal length of the optical system may be -2.5. For example, the conic constant of the fourth surface 104 may be -8 to -2. For example, the conic constant of the fourth surface 104 may be -6 to -3. For example, the conic constant of the fourth surface 104 may be -5.

In combination with the aforementioned examples, for example, the coefficients of the high-order terms of the first surface 101 satisfy: α₄=6.0E-06, α₆=6.1E-08, α₈=-5.2E-10, α₁₀=1.3E-12, α₁₂=8.2E-16, α₁₄=-7.6E-18. For example, the coefficients of the high-order terms of the second surface 102 satisfy: α₄=-1.9E-05, α₆=8.0E-08, α₈=1.7E-10, α₁₀=-4.6E-13, α₁₂=-3.93E-15. For example, the coefficients of the high-order terms of the third surface 103 satisfy: α₄=7.5E-06, α₆=4.8E-08, α₈=-2.9E-10, α₁₀=-1.6E-12, α₁₂=2.2E-14, α₁₄=-9.8E-17. For example, the coefficients of the high-order terms of the fourth surface 104 satisfy: α₄=-5.5E-06, α₆=1.8E-09, α₈=7.7E-11, α₁₀=-5.9E-13, α₁₂=2.4E-15, α₁₄=-6.4E-18.

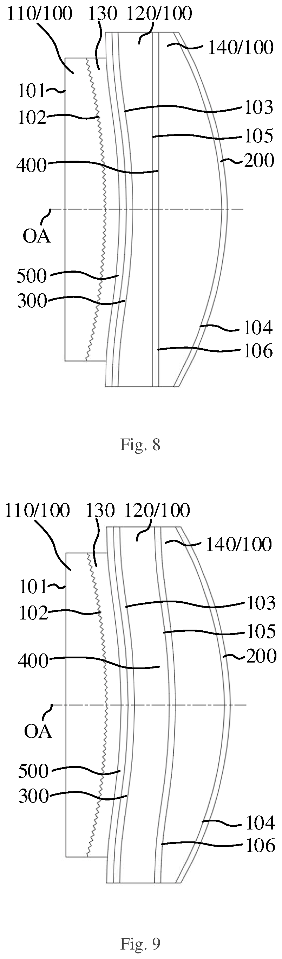

Fig. 8 shows an optical system provided by an example in at least one embodiment of the present disclosure.

The difference between the optical system shown in Fig. 8 and the optical system shown in Fig. 1 lies in that the number of lenses in the optical system shown in Fig. 8 is different from the number of lenses in the optical system shown in Fig. 1. Certainly, the optical system shown in Fig. 8 may also be different from the optical system shown in Fig. 1 in other aspects, such as the surface type of each surface and the focal power of the adhesive layer lens 130, which is not limited by the present disclosure. For example, the surface type parameter of each surface type in the optical system shown in Fig. 8 may be different from or the same as the surface type parameter of each surface type in the optical system shown in Fig. 1. The transflective film 200, the reflective polarizing layer 300, the phase retardation film 400, and the linear polarizing film 500 in the optical system shown in Fig. 8 may have the same characteristics as the transflective film 200, the reflective polarizing layer 300, the phase retardation film 400, and the linear polarizing film 500 in the optical system shown in Fig. 1, which will not be repeated herein.

In some examples, referring to Fig. 8, the at least two lenses include a first lens 110, a second lens 120, and a third lens 140 that are arranged in sequence along the optical axis OA direction. For example, the adhesive layer lens 130 is located between the first lens 110 and the second lens 120. For example, the lens assembly 100 may be composed of the first lens 110, the second lens 120, and the third lens 140. The first lens 110 includes the first surface 101 and the second surface 102, the second lens 120 includes the third surface 103, and the third lens 140 includes the fourth surface 104, the second lens 120 further includes a fifth surface 105 opposite to the third surface 103, and the third lens 140 further includes a sixth surface 106 located between the fifth surface 105 and the fourth surface 104. For example, the third surface 103 and the fifth surface 105 are two opposite surfaces of the second lens 120 on the optical axis OA. For example, the fourth surface 104 and the sixth surface 106 are two opposite surfaces of the third lens 140 on the optical axis OA. The fifth surface 105 is consistent with the sixth surface 106 in surface type, so that the second lens 120 is attached to the third lens 140.

By providing the second lens 120 and the third lens 140, more film attaching positions may be provided. For example, the phase retardation film 400 may be disposed between the fifth surface 105 and the sixth surface 106.

As shown in Fig. 8, one of the focal power of the first lens 110 and the focal power of the adhesive layer lens 130 is a positive value, and the other is a negative value. For example, the focal power of the first lens 110 may be a positive value, that is, the first lens 110 is a convex lens, and the focal power of the adhesive layer lens 130 may be a negative value, that is, the adhesive layer lens 130 is a concave lens. In this way, the chromatic aberration may be corrected by the first lens 110 and the adhesive layer lens 130 together.

As shown in Fig. 8, the dispersion coefficient of at least one selected from the group consisting of the first lens 110 and the second lens 120 is different from the dispersion coefficient of the adhesive layer lens 130. For example, the dispersion coefficient of the first lens 110 may be different from the dispersion coefficient of the adhesive layer lens 130. For example, the dispersion coefficient of the second lens 120 may be different from the dispersion coefficient of the adhesive layer lens 130. In this way, the chromatic aberration may be corrected by the difference in dispersion coefficient. For example, the refractive index of at least one selected from the group consisting of the first lens 110 and the second lens 120 may be different from the refractive index of the adhesive layer lens 130, so that the chromatic aberration may be corrected by the difference in refractive index.

Fig. 9 shows an optical system provided by an example in at least one embodiment of the present disclosure.

The difference between the optical system shown in Fig. 9 and the optical system shown in Fig. 8 lies in that the fifth surface 105 and the sixth surface 106 in the optical system shown in Fig. 9 are different from the fifth surface 105 and the sixth surface 106 in the optical system shown in Fig. 8. Certainly, the optical system shown in Fig. 9 may also be different from the optical system shown in Fig. 8 in other aspects, such as the surface type of each surface and the focal power of the adhesive layer lens 130, which is not limited by the present disclosure. For example, the surface type parameter of each surface type in the optical system shown in Fig. 9 may be different from or the same as the surface type parameter of each surface type in the optical system shown in Fig. 8. The transflective film 200, the reflective polarizing layer 300, the phase retardation film 400, and the linear polarizing film 500 in the optical system shown in Fig. 9 may have the same characteristics as the transflective film 200, the reflective polarizing layer 300, the phase retardation film 400, and the linear polarizing film 500 in the optical system shown in Fig. 8, which will not be repeated herein.

For example, referring to Fig. 8, the fifth surface 105 and the sixth surface 106 may both be flat surfaces. For example, referring to Fig. 9, the fifth surface 105 and the sixth surface 106 are both curved surfaces. For example, the fifth surface 105 and the sixth surface 106 are both convex surfaces. For example, the fifth surface 105 and the sixth surface 106 both bend toward the side away from the third surface 103, so that the difference between the center thickness and the edge thickness of the second lens 120 is small, and the difference between the center thickness and the edge thickness of the third lens 140 is small, thereby reducing the difficulty in processing.

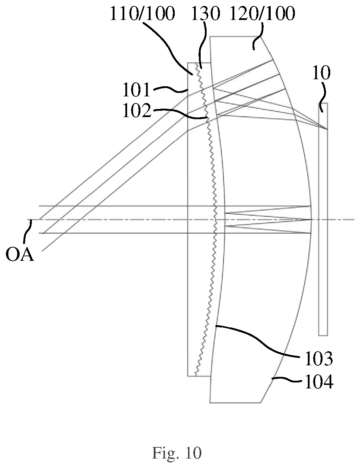

Fig. 10 shows a display apparatus provided by an example in at least one embodiment of the present disclosure.

As shown in Fig. 10, at least one embodiment of the present disclosure provides a display apparatus, which includes the optical system of any of the above embodiments. For example, the display apparatus further includes a display screen 10, and the display screen 10 is located on the side of the fourth surface 104 away from the first surface 101. Since the display apparatus according to the embodiment of the present disclosure includes at least one of the above optical systems, it also has corresponding beneficial technical effects, which will not be repeated here. It may be understood that the display screen 10 shown in Fig. 10 may be combined with the optical systems shown in Fig. 1, Fig. 3, and Fig. 5 to Fig. 9 to form different display apparatuses. For example, the display surface of the display screen 10 is located at the focal plane on the light incident side of the optical system.

For example, referring to Fig. 1 to Fig. 10, the ratio of the total track length (TTL) of the optical system to the effective focal length of the optical system may be 0.85 to 1. For example, the ratio of the total track length of the optical system to the effective focal length of the optical system may be 0.9 to 0.95. The total track length refers to the distance from the highest point on the first surface 101 of the lens assembly 100 in the optical system to the center of the display screen 10 along the optical axis OA. The highest point on the first surface 101 includes the edge sag of the lens assembly 100 on the side where the first surface 101 is located.

For example, referring to Fig. 1 to Fig. 10, the field of view of the optical system may be greater than 90°. For example, the field of view is the full field of view. For example, the field of view of the optical system may be, but is not limited to, 90°, 92°, 94°, 96°, 98°, and 100°. For example, calculating with an effective aperture that may reach a field of view of 100°, the weight of the binocular lens is less than 20 g.

For example, referring to Fig. 1 to Fig. 10, the exit pupil distance (EPD) of the optical system may be 12 mm to 20 mm. For example, the exit pupil distance is the distance from the vertex of the last surface of the optical system to the intersection of the exit pupil plane and the optical axis. For example, the exit pupil distance may be 14 mm to 18 mm. For example, the exit pupil distance may be 15 mm. The optical system provided by the present disclosure has a large exit pupil distance, which may satisfy myopic users wearing glasses.

For example, referring to Fig. 1 to Fig. 10, the ratio of the effective aperture of the lens assembly 100 to the effective focal length of the lens assembly 100 may be 2.3 to 2.7. The effective aperture of the lens assembly refers to the effective transmitting aperture, such as the largest aperture through which light rays may pass through the lens assembly, and the aperture is determined by the maximum luminous flux of the lens assembly. For example, the ratio of the effective aperture to the effective focal length may be 2.4 to 2.6. For example, the ratio of the effective aperture to the effective focal length may be 2.5.

For example, referring to Fig. 1 to Fig. 10, the ratio of the distance between the stop (such as the human eye) in the optical system and the first surface 101 on the optical axis OA to the effective focal length is 0.7 to 1.5. For example, the ratio of the distance between the stop and the first surface on the optical axis OA to the effective focal length is 0.8 to 1.4. For example, the ratio of the distance between the stop and the first surface on the optical axis OA to the effective focal length is 0.9 to 1.3. For example, the ratio of the distance between the stop and the first surface on the optical axis OA to the effective focal length is 1 to 1.2. For example, the ratio of the distance between the stop and the first surface on the optical axis OA to the effective focal length is 1.1.

For example, referring to Fig. 1 to Fig. 10, the effective aperture of the stop is 4 mm. For example, the ratio of the distance between the object plane in the optical system and the stop on the optical axis OA to the effective focal length is below -80.

For example, referring to Fig. 1 to Fig. 10, the ratio of the distance between the display surface of the display screen 10 and the image plane on the optical axis OA to the effective focal length is 0.03 to 0.12. For example, the ratio of the distance between the display surface of the display screen 10 and the image plane on the optical axis OA to the effective focal length is 0.06 to 0.09. For example, the ratio of the distance between the display surface of the display screen 10 and the image plane on the optical axis OA to the effective focal length is 0.08.

For example, referring to Fig. 1 to Fig. 10, the ratio of the distance between the fourth surface 104 and the display surface of the display screen 10 on the optical axis OA to the effective focal length is 0.05 to 0.3. For example, the ratio of the distance between the fourth surface 104 and the display surface of the display screen 10 on the optical axis OA to the effective focal length is 0.06 to 0.2. The ratio of the distance between the fourth surface 104 and the display surface of the display screen 10 on the optical axis OA to the effective focal length is 0.1.

For example, the display screen may be any type of display screen, such as a liquid crystal display screen, an organic light emitting diode display screen, an inorganic light emitting diode display screen, a quantum dot display screen, a projector (such as an LCOS micro projector), and the like.

For example, the display screen is a liquid crystal display screen with a pixel size of about twenty-odd microns. For example, the display screen is an organic light emitting diode display screen with a pixel size of about a few microns.

For example, the display apparatus may be a virtual reality display apparatus. For example, the virtual reality display apparatus may be a display apparatus using an ultra-short focus folded optical path.

For example, the display apparatus may be a near-eye display apparatus, and the near-eye display apparatus may be a wearable VR helmet, VR glasses, etc., which is not limited to the embodiments of the present disclosure.

The following points need to be explained:
(1) In the drawings of the embodiments of the present disclosure, only the structures involved in the embodiments of the present disclosure are involved, and for other structures, reference may be made to general designs.
(2) The features in the same embodiment or different embodiments of the present disclosure may be combined with each other without conflict.

The above description is only exemplary embodiments of the present disclosure, and is not intended to limit the protection scope of the present disclosure. The protection scope of the present disclosure is determined by the appended claims.

## Claims

1. An optical system, comprising:
a lens assembly, comprising at least two lenses, wherein the at least two lenses comprise a first surface, a second surface, a third surface, and a fourth surface that are arranged in sequence along a direction of an optical axis of the lens assembly;
a transflective film, disposed on a side of the fourth surface away from the third surface;
a reflective polarizing layer, disposed on a side of the third surface away from the fourth surface;
a phase retardation film, located on a side of the fourth surface away from the transflective film; and
an adhesive layer, comprising an adhesive layer lens;
wherein at least one selected from the group consisting of the first surface and the second surface is a Fresnel surface, and the adhesive layer is glued between the second surface and the third surface.

2. The optical system of claim 1, wherein a distance between two intersection points at which the first surface and the second surface intersect with the optical axis is a first distance; and
a ratio of a center thickness of the adhesive layer lens to the first distance is in a range from 1/6 to 2.

3. The optical system of claim 1 or 2, wherein a center thickness of the adhesive layer lens is in a range from 0.5 mm to 3 mm.

4. The optical system of any of claims 1 to 3, wherein the at least two lenses comprise a first lens and a second lens that are arranged along the direction of the optical axis, the first lens comprises the first surface and the second surface, and the second lens comprises the third surface and the fourth surface; and
one of a focal power of the first lens and a focal power of the adhesive layer lens is a positive value, and the other one of the focal power of the first lens and the focal power of the adhesive layer lens is a negative value.

5. The optical system of claim 4, wherein a ratio of the focal power of the first lens to a dispersion coefficient of the first lens is a first ratio, and a ratio of the focal power of the adhesive layer lens to a dispersion coefficient of the adhesive layer lens is a second ratio; and
a sum of the first ratio and the second ratio is less than 0.

6. The optical system of claim 4 or 5, wherein a refractive index of the first lens is less than a refractive index of the adhesive layer lens, a refractive index of the second lens is less than the refractive index of the adhesive layer lens, and the refractive index of the first lens is less than or equal to the refractive index of the second lens.

7. The optical system of any of claims 4 to 6, wherein a dispersion coefficient of the first lens is greater than a dispersion coefficient of the adhesive layer lens, a dispersion coefficient of the second lens is greater than the dispersion coefficient of the adhesive layer lens, and the dispersion coefficient of the first lens is greater than or equal to the dispersion coefficient of the second lens.

8. The optical system of claim 4, wherein a refractive index of the first lens is greater than a refractive index of the adhesive layer lens, and the refractive index of the first lens is greater than a refractive index of the second lens.

9. The optical system of claim 4, wherein a dispersion coefficient of the first lens is less than a dispersion coefficient of the adhesive layer lens, and the dispersion coefficient of the first lens is less than a dispersion coefficient of the second lens.

10. The optical system of any of claims 4 to 9, wherein a ratio of a center thickness to an edge thickness of the first lens is a third ratio, and a ratio of a center thickness to an edge thickness of the second lens is a fourth ratio; and
at least one selected from the group consisting of the third ratio and the fourth ratio is greater than 1 and less than 3.

11. The optical system of any of claims 1 to 10, wherein the second surface is a planar Fresnel surface or a curved Fresnel surface.

12. The optical system of claim 11, wherein the second surface is a convex surface, and a center thickness of the adhesive layer lens is less than an edge thickness of the adhesive layer lens.

13. The optical system of claim 11, wherein the second surface is a convex surface, and an absolute value of a radius of curvature of the second surface is less than an absolute value of a radius of curvature of the third surface.

14. The optical system of claim 11, wherein the second surface is a convex surface, and a ratio of a radius of curvature of the second surface to an effective focal length of the optical system is in a range from -0.5 to -2.

15. The optical system of claim 11, wherein the second surface is a concave surface, and a center thickness of the adhesive layer lens is greater than an edge thickness of the adhesive layer lens.

16. The optical system of any of claims 1 to 15, wherein a distance between two intersection points at which the first surface and the second surface intersect with the optical axis is a first distance;
a distance between two intersection points at which the third surface and the fourth surface intersect with the optical axis is a second distance; and
a ratio of the second distance to the first distance is in a range from 2 to 4.

17. The optical system of claim 16, wherein a ratio of the first distance to an effective focal length of the optical system is in a range from 0.1 to 0.3, and a ratio of the second distance to the effective focal length of the optical system is in a range from 0.5 to 0.7.

18. The optical system of any of claims 1 to 17, wherein the first surface is a flat surface; or
the first surface is a convex surface, a ratio of a radius of curvature of the first surface to an effective focal length of the optical system is in a range from -40 to -50, and a conic constant of the first surface is in a range from -10 to 0.

19. The optical system of any of claims 1 to 18, wherein the third surface is a flat surface; or
the third surface is a concave surface, a ratio of a radius of curvature of the third surface to an effective focal length of the optical system is in a range from -3 to -4, and a conic constant of the third surface is in a range from - 10 to -1.

20. The optical system of any of claims 1 to 19, wherein the fourth surface is a convex surface, a ratio of a radius of curvature of the fourth surface to an effective focal length of the optical system is in a range from -2 to - 3, and a conic constant of the fourth surface is in a range from -10 to -1.

21. The optical system of any of claims 1 to 3, wherein the at least two lenses comprise a first lens, a second lens, and a third lens that are arranged in sequence along the direction of the optical axis;
the first lens comprises the first surface and the second surface, the second lens comprises the third surface, and the third lens comprises the fourth surface;
the second lens further comprises a fifth surface opposite to the third surface, and the third lens further comprises a sixth surface located between the fifth surface and the fourth surface; and a surface type of the fifth surface is consistent with a surface type of the sixth surface;
wherein one of a focal power of the first lens and a focal power of the adhesive layer lens is a positive value, and the other one of the focal power of the first lens and the focal power of the adhesive layer lens is a negative value.

22. The optical system of any of claims 1 to 3, wherein the at least two lenses comprise a first lens, a second lens, and a third lens that are arranged in sequence along the direction of the optical axis;
the first lens comprises the first surface and the second surface, the second lens comprises the third surface, and the third lens comprises the fourth surface;
the second lens further comprises a fifth surface opposite to the third surface, and the third lens further comprises a sixth surface located between the fifth surface and the fourth surface; and a surface type of the fifth surface is consistent with a surface type of the sixth surface;
wherein a dispersion coefficient of at least one selected from the group consisting of the first lens and the second lens is different from a dispersion coefficient of the adhesive layer lens.

23. A display apparatus, comprising the optical system of any of claims 1 to 22.
